# EUROPÄISCHE PATENTSCHRIFT

(11) **EP 3 132 610 B1**
(45) Veröffentlichungstag und Bekanntmachung des Hinweises auf die Patenterteilung: **19.08.2020**
(21) Anmeldenummer: 15721137.6
(22) Anmeldetag: 16.04.2015
(51) Int. Cl.: H04N 21/422, H04N 21/25, H04N 21/658, H04N 21/6547

(54) **VERFAHREN ZUM PROGRAMMIEREN EINER FERNSTEUERUNG**
METHOD FOR PROGRAMMING A REMOTE CONTROL
PROCÉDÉ DE PROGRAMMATION D'UNE TÉLÉCOMMANDE

(30) Priorität: 16.04.2014 DE 102014005534
(43) Veröffentlichungstag der Anmeldung: 22.02.2017
(73) Patentinhaber: fm marketing gmbh, 5202 Obertrum am Wallersee (AT)
(72) Erfinder: FISCHER, Thomas, 83457 Bayerisch Gmain (DE); MIRLACHER, Thomas, 5020 Salzburg (AT)
(74) Vertreter: von Bülow & Tamada
(86) Internationale Anmeldenummer: PCT/EP2015/058281
(87) Internationale Veröffentlichungsnummer: WO 2015/158835

(56) Entgegenhaltungen:
- EP-A1- 1 198 069
- EP-A2- 2 148 308
- WO-A1-01/54292
- US-A- 6 098 064
- US-A1- 2012 200 400
- James Edward Pitkow: "Characterizing World Wide Web Ecologies", , 1. Juni 1997 (1997-06-01), Seiten 1-109, XP055196828, Gefunden im Internet: URL:https://smartech.gatech.edu/bitstream/ handle/1853/3543/97-16.pdf?sequence=1 [gefunden am 2015-06-18]

## Beschreibung

Die Erfindung bezieht sich auf ein Verfahren zum Programmieren einer Fernsteuerung gemäß dem Oberbegriff des Patentanspruches 1.

Eine solche Fernsteuerung ist aus der EP 2 148 308 B1 bekannt. Dort wird zur Programmierung einer Fernsteuerung, die ein bestimmtes fernzusteuerndes Gerät bedienen soll, zunächst das zu bedienende Gerät an der Fernsteuerung ausgewählt und dieses Gerät zumindest teilweise identifizierende Meta-Daten vom Gerät ausgelesen oder von Hand eingegeben. Diese Meta-Daten werden an eine externe Datenbank übertragen, wo anhand dieser Meta-Daten zu dem ausgewählten Gerät passende Codesets in der Datenbank selektiert werden. Diese selektierten Codesets werden an die Fernsteuerung in einer geordneten Reihenfolge rückübertragen und vom Benutzer ausprobiert, bis ein für das zu steuernde Gerät passendes Codeset gefunden wurde. Ist dies der Fall, so wird ein Bestätigungssignal an die Datenbank rückübertragen. Die geordnete Reihenfolge berücksichtigt die geographische Region des Benutzers, in welcher die Fernsteuerung benutzt werden soll. Die Auswahl möglicher Codesets, die dem Benutzer angeboten werden, erfolgt so, dass die gemäß der geographischen Region wahrscheinlichsten Codesets zu Beginn einer Auswahlliste angezeigt werden.

Dem liegt die Erkenntnis zugrunde, dass Hersteller von Geräten, wie z.B. Fernsehgeräten, bestimmte Typen mit bestimmten Codesets bevorzugt in bestimmte Regionen, wie z.B. Nordamerika, Europa, Asien etc. liefern, wobei sich die Codesets regional unterscheiden.

Geräte der Heimelektronik, wie z.B. Fernsehgeräte, DVD-Geräte, Musikanlagen usw., werden heute meist über Fernsteuerungen bedient. Da es für die Benutzer ausgesprochen lästig ist, für jedes einzelne zu steuernde Gerät eine eigene Fernsteuerung zu verwenden, gibt es auf dem Markt eine Vielzahl von Universal-Fernsteuerungen, die so programmiert werden können, dass sie eine Vielzahl unterschiedlicher Geräte steuern können. Die Steuerung erfolgt über drahtlos von der Fernsteuerung an das zu steuernde Gerät übertragene Befehle, die nach einem vorgegebenen Protokoll aufbereitet und codiert sind. Der gesamte Befehlsvorrat für die Steuerung aller Funktionen eines bestimmten Gerätes, d.h. ein Satz von Codes, wird als "Codeset" bezeichnet. Diese Codesets werden von den Herstellern der Geräte frei definiert, wobei weltweit mehrere tausend verschiedene Codesets verwendet werden.

Will nun ein Benutzer eine Fernsteuerung für die Steuerung eines bestimmten Gerätes programmieren, so muss er den passenden Codeset finden. Hierfür muss das Gerät identifiziert werden, um den passenden Codeset bereit zu stellen. Dies ist in der Praxis für den Endbenutzer häufig aber nicht möglich, weil die Gerätehersteller den Benutzern nicht alle benötigten Informationen zur Verfügung stellen.

Hierbei kann es aber vor allem bei Herstellern mit großer Sortimentsbreite vorkommen, dass eine sehr große Anzahl möglicher Codesets dem Benutzer angeboten wird, die er einzeln herunterladen und testen muss, bis er das passende Codeset gefunden hat.

Das Herunterladen von Codesets für Fernsteuerungen von externen Datenbanken über Telefonleitungen oder Internetverbindungen ist auch aus der EP 1198069 A1, der WO 92/0564 A1, der WO 99/34564 A1 und der WO 00/17738 A1 bekannt.

Das Ermitteln von relevanten Daten eines zu steuernden Gerätes erfolgt gemäß US 7,973,648 B2 bei einem DVD-Player über ein HDMI-Kabel, das mit einem TV-Gerät verbunden ist. Über das HDMI-Kabel werden EDID-Daten abgefragt und hieraus der Herstellername extrahiert. Über den Herstellnamen werden passende Codesets gesucht, zur Fernsteuerung übertragen, getestet und, wenn passend, in der Fernsteuerung gespeichert. Die passenden Codesets sind dort allerdings in dem DVD-Player gespeichert und nicht in einer über eine Fernverbindung zugängliche Datenbank.

Die US 2012/0249890 A1 schlägt dagegen vor, die EDID-Daten über ein HDMI-Kabel auszulesen und zur Identifizierung eines Gerätes zu verwenden, worauf über eine Internetverbindung passende Codesets von einer externen Datenbank abgerufen werden.

Ein Problem bei dem vorgenannten Stand der Technik liegt darin, dass die jeweiligen Geräte nicht immer eindeutig identifiziert werden können und daher die Anzahl der möglicherweise passenden Codesets recht groß ist mit der Folge, dass der Benutzer eine Vielzahl von möglicherweise passenden Codesets ausprobieren muss, was zeitaufwendig und mühsam ist. Gerade bei Herstellern mit großer Sortimentsbreite ist auch die Anzahl möglicher Codesets, die dem Benutzer angeboten wird, sehr groß.

Aufgabe der vorliegenden Erfindung ist es, das Programmieren einer Fernsteuerung zu erleichtern, dadurch, dass der passende Codeset möglichst exakt gefunden wird oder dem Benutzer lediglich eine sehr geringe Anzahl möglicher Codesets in einer sortierten Reihenfolge angeboten wird.

Diese Aufgabe wird durch die im Patentanspruch 1 angegebenen Merkmale gelöst. Vorteilhafte Ausgestaltungen und Weiterbildungen der Erfindung sind dem Unteranspruch zu entnehmen.

In der folgenden Beschreibungen werden folgende Definitionen verwendet:
Gerät ist eine von einer Fernsteuerung zu steuernde Einrichtung, wie z.B. ein Fernsehgerät, ein Satelliten-Receiver, eine Settopbox, ein DVD-Player, eine Musikanlage usw. sowie auch eine sonstige Einrichtung einer Haussteuerung, wie z.B. Heizungs-, Beleuchtungs- oder Torsteuerung.

Fernsteuerung ist eine vom Benutzer zu betätigende Einrichtung, die meist drahtlos Steuerbefehle aussendet, mit denen das Gerät gesteuert wird.

Die Datenbank ist eine über eine Schnittstelle anzusprechende Datenbank, auf der Codesets für die Fernsteuerung gespeichert sind. Die Datenbank kann "extern" lokalisiert sein oder auch räumlich beim Benutzer, z.B. in dessen Settopbox.

Schnittstelle ist eine elektronisches Einrichtung, die eine Kommunikation zwischen der Datenbank, der Fernsteuerung und dem Gerät herstellt. Es kann sich dabei um eine Settopbox, einen Router, einen Computer oder ähnliches handeln.

Grundidee der Erfindung ist es, Metadaten des Gerätes zu erfassen, aus diesen Metadaten solche Daten zu extrahieren, die zur Identifizierung eines Gerätes brauchbar sind, wobei aus den letzt genannten Daten sog. "Fingerabdruckdaten" generiert werden, mit denen eine Datenbank abgefragt wird, ob zu diesen Fingerabdruckdaten bereits ein eindeutiger Codeset hinterlegt ist. Ist kein eindeutiger Codeset hinterlegt, so wird nach wahrscheinlich passenden Codesets gesucht, wobei die Wahrscheinlichkeit nach folgenden Kriterien bestimmt wird:
- Häufigkeit der Abfrage eines bestimmten Codesets
- Zeitpunkt der Abfrage
- Anzahl der in der Datenbank vorhandenen Geräte bzw. Fernsteuerungen mit demselben Teil-Codeset.

Das Erfassen der genannten Metadaten kann voll automatisch erfolgen, wie zum Beispiel über sog. EDID-Daten (Extended Display Identification Data), oder HDMI-CEC Informationen (Consumer Electronics Control) die heute ein international anerkannter Standard sind und nicht nur bei Fernsehgeräten sondern auch bei DVD-Playern, Blu-Ray-Playern, Spielkonsolen und sonstigen Geräten der Unterhaltungselektronik und der Heimsteuerung bestimmte Daten zur Verfügung stellen, wie z.B. Hersteller, Produktcode, Seriennummer, Herstelldatum, Auflösungsvermögen und Wiederholfrequenz eines Bildschirms, Audio-Codecs etc. Hier ist allerdings zu beachten, dass viele Hersteller keine ausreichend exakten Daten angeben, die ein Geräte-Modell eindeutig identifizieren, um damit eine Zuordnung zum passenden Codeset festzulegen. Weiter sind einige Metadaten ungeeignet, das Gerät zu identifizieren und können daher ausgefiltert werden, um die oben genannten Fingerabdruckdaten zu bestimmen.

Aufgrund der Fingerabdruckdaten und den genannten Auswahlkriterien werden dem Benutzer ein oder mehrere Codesets angeboten, die er nacheinander herunterladen und ausprobieren kann. Sobald der passende Codeset gefunden wird, meldet der Benutzer dies an die Datenbank, die dann eine Verknüpfung zwischen den Fingerabdruckdaten und dem Codeset erstellt.

Zusätzlich speichert sie, wie häufig diese Zuordnung als passend definiert wurde. Je häufiger dies erfolgt ist, desto größer ist die Wahrscheinlichkeit, dass bei Abfrage mit denselben Fingerabdruckdaten auch derselbe Codeset richtig ist. Auch speichert die Datenbank den Zeitpunkt der Abfrage, wobei jüngeren Abfragen eine höhere Wahrscheinlichkeit zugeordnet wird als älteren Abfragen.

Die Datenbank passt sich dadurch automatisch den Marktverhältnissen an. Kommt beispielsweise ein neues Gerät auf den Markt, so werden nach und nach Anfragen zu diesem Gerät an Häufigkeit zunehmen, bis die Wahrscheinlichkeit so hoch ist, dass dem Benutzer dieses Codeset als erstes angeboten werden kann.

In Fällen, bei denen das entsprechende Gerät keine Meta-Daten zur Verfügung stellt, kann auch vorgesehen sein, dass die entsprechenden Informationen beim Programmieren der Fernsteuerung abgefragt und vom Benutzer von Hand eingegeben werden. Dies kann über eine auf einem Bildschirm angezeigte Menüsteuerung erfolgen unter Eingabe der Daten über eine Tastatur der Fernsteuerung.

Die Datenbank kann dabei eine externe Datenbank sein, die über eine Kommunikationsverbindung, wie z.B. eine Internetverbindung, zugänglich ist und beispielsweise bei dem Hersteller der Fernsteuerung steht oder bei einem Serviceprovider. Die Datenbank kann aber auch in der Settopbox lokalisiert sein.

Die Kommunikation zwischen der Datenbank und der Programmierstation erfolgt im Regelfall über eine Settopbox oder ähnliche Geräte, wie z.B. ein Smart TV, das mit der Datenbank kommuniziert. Die Fernsteuerung kann bidirektional mit der Settopbox kommunizieren sowie unidirektional oder in einzelnen Fällen auch bidirektional mit den zu steuernden Geräten.

Die Kommunikation zwischen Fernsteuerung und Settopbox kann auf beliebige Weise stattfinden, wie z.B. über Infrarot, RF4CE, Bluetooth, Bluetooth Low Energy, Wi-Fi, Wi-Fi direkt oder sonstige Protokolle. Die Übertragung der Metadaten erfolgt üblicherweise im EDID-Format oder im HDMI-CEC-Format oder ähnlichen Formaten für die Beschreibung der angeschlossenen Geräte.

Als Metadaten werden diejenigen Informationen verstanden, die helfen, das zu steuernde Gerät zu identifizieren. Hierunter fallen beispielsweise:
- Hersteller
- Produktionscode
- Modellbezeichnung (falls vorhanden)
- Herstelldatum
- Seriennummer.

Unter Fingerprintdaten werden hingegen nur diejenigen Informationen verstanden, die ein Modell beschreiben nicht aber ein spezifisches Gerät, wie z.B. Seriennummer, Produktionsdatum etc. Diese Daten werden ausgefiltert und die Fingerabdruckdaten generiert, die als Schlüssel für die Datenbankabfrage verwendet werden, um Informationen zu einem bestimmten Gerät zu finden.

Der wesentliche Kern der Erfindung ist dann, eine Sortierung vorzunehmen um die wahrscheinlichsten Codesets anbieten zu können. Die Sortierung kann in mehreren Schritten erfolgen, nämlich:
1. Sortierung nach Verwendungshäufigkeit, also aufgrund Feedback von Zugriffen von Endkunden auf die Datenbank; damit wird die Häufigkeit der Abfrage eines bestimmten Codesets berücksichtigt.
2. Sortieren nach Häufigkeit der vorhandenen Geräte, d.h. Anzahl der in der Datenbank vorhandenen Geräte mit demselben Teilcodeset;
3. Zeitpunkt der Abfrage.

Wenn mehrere Geräte dieselben Fingerprintdaten besitzen, über die dieselben Codesets selektiert werden, sind diese wahrscheinlicher als Einzelgeräte. Diese Sortierung ist auch zeitabhängig, da ältere Geräte weniger wahrscheinlich sind als neuere. Bei der Sortierung rücken also die häufiger und zeitnäher abgefragten Codesets nach und nach nach vorne, so dass sich die Datenbank dynamisch an sich ändernde Marktverhältnisse anpasst.

Zur Unterscheidung der oben definierten Metadaten und der Fingerabdruckdaten sei ein Beispiel eines konkreten Fernsehgerätes der Firma Loewe angegeben:

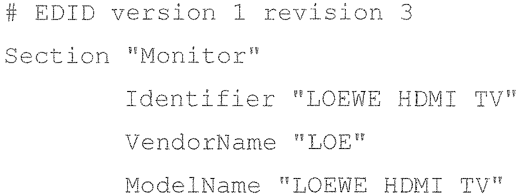

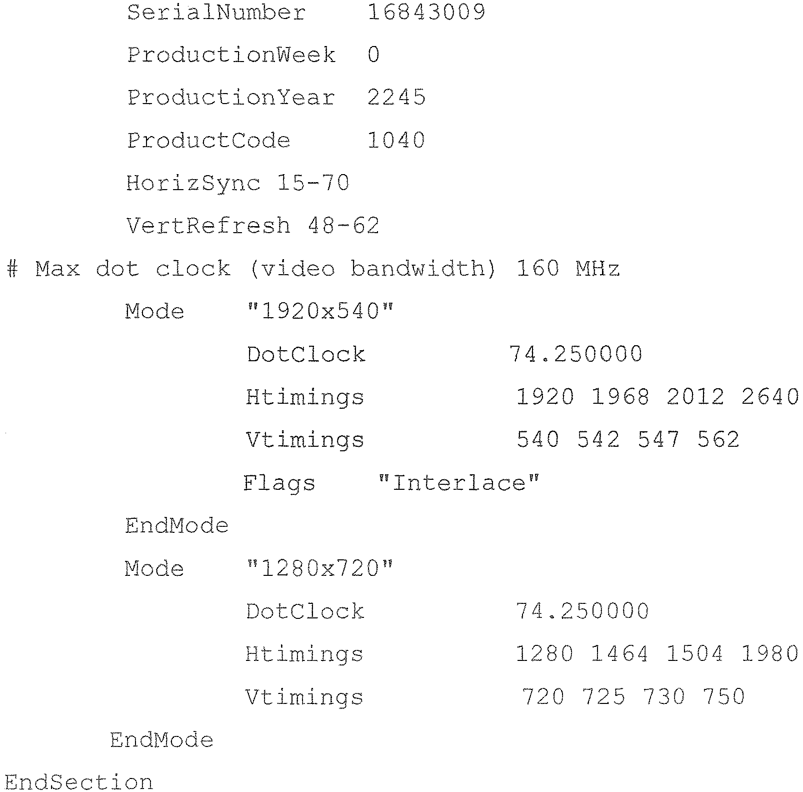

Als erster Schritt werden die Fingerabdruckdaten gefiltert, die auf einen einzelnen Fernseher hinweisen, wie z.B. Hersteller, Seriennummer, Produktionswoche, Produktionsjahr. Damit sollte der "Fingerabdruck" ein bestimmtes Modell eines bestimmten Herstellers beschreiben und im Idealfall den passenden Codeset in der Datenbank mit denen das Gerät bedient werden kann, referenzieren.

Wie man aber bei dem hier genannten Beispiel sehen kann, sind die EDID-Daten nicht bei jedem Hersteller vollständig richtig. Auch sind die Produktionsdaten und die Seriennummern nicht immer zuverlässig. Damit würde der Fingerabdruck für verschiedene Modelle den gleichen Eintrag liefern, was zu Fehlern führen könnte.

Ist ein solcher Fingerabdruck noch nicht in der Datenbank hinterlegt, werden die analysierten Informationen verwendet, um das mögliche Endgerät zu identifizieren. Hierzu werden je nach Verfügbarkeit Hersteller, Modellbezeichnung, Herstelldatum etc. verwendet. Wenn der Endbenutzer schlussendlich einen funktionierenden Code aus der gefilterten Liste der möglichen Ergebnisse ausgewählt hat, wird diese Selektion als vorläufige Verknüpfung in der Datenbank hinterlegt. Sobald eine definierte Anzahl von Benutzern dieselbe Auswahl getroffen hat, wird dieser Fingerabdruck in die reguläre Datenbank übernommen und kann fortan direkt benutzt werden.

Es erfolgt auch eine automatische Umordnung oder Reihenfolge der dem Endkunden angezeigten, zur Auswahl angebotenen Codes nämlich nach einer wahrscheinlichkeitsbasierten Anordnung. Diejenigen Codes, die wahrscheinlicher sind, werden in der Reihenfolge vor anderen Codes gezeigt, wobei die Anordnung gemäß einem Algorithmus bestimmt wird und abhängig ist von der Häufigkeit und Zeitpunkt der Abfrage der von Endkunden ausgewählten Codes, Herstellungsdatum des Endgerätes, Popularität der einzelnen Hersteller in einem definierten Kundenkreis.

Im Folgenden wird die Erfindung anhand von Ausführungsbeispielen im Zusammenhang mit der Zeichnung ausführlicher erläutert. Es zeigt:
- Fig. 1: ein Prinzipschaltbild eines Systems zum Programmieren einer Fernsteuerung;
- Fig. 2: ein Flussdiagramm der Verfahrensschritte.

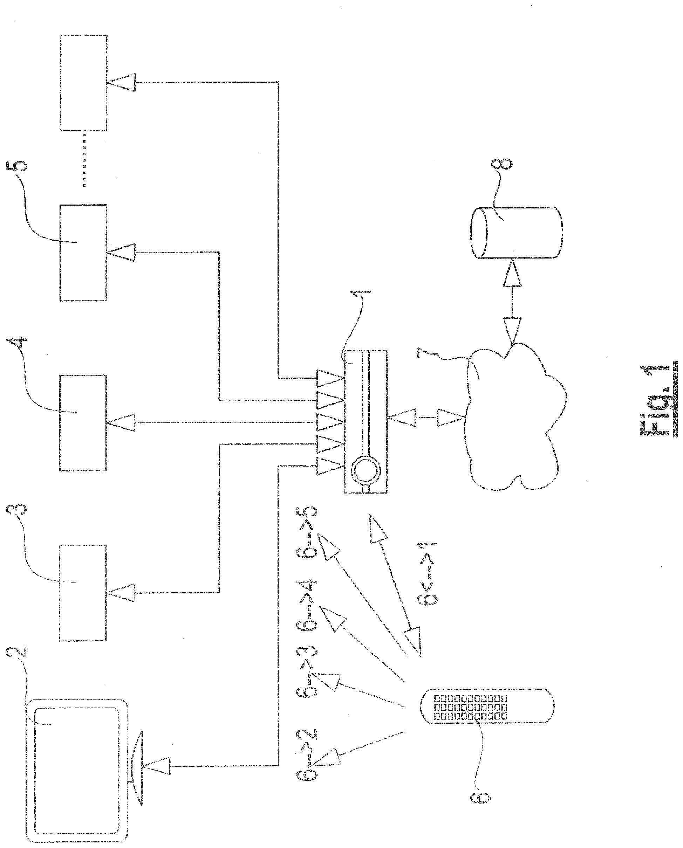

Figur 1 zeigt ein System mit einer Settopbox 1 an die mehrere fernzusteuernde Geräte 2, 3, 4, 5 angeschlossen sind, wobei das Bezugszeichen 2 einen Fernsehempfänger, das Bezugszeichen 3 einen Videorekorder, das Bezugszeichen 4 einen DVD-Spieler bezeichnet und das Bezugszeichen 5 ein beliebiges Gerät. Alle fernzusteuernden Geräte werden generell als "Gerät" bezeichnet.

Die Geräte 2-5 können von einer Fernsteuerung 6 ferngesteuert werden, was voraussetzt, dass die Fernsteuerung 6 einen entsprechenden Codevorrat, dh. den Codeset, für jedes einzelne Gerät gespeichert hat. Die Fernsteuerung kann sowohl mit den einzelnen Geräten 2-5 als auch mit der Settopbox kommunizieren. Die Kommunikation mit den Geräten 2-5 kann unidirektional von der Fernsteuerung 6 zu den Geräten 2-5 erfolgen, während die Kommunikation mit der Settopbox 1 bidirektional erfolgt.

Die Settopbox 1 ist über eine Kommunikationsverbindung 7 mit einer Datenbank 8 verbunden, die beispielsweise beim Hersteller der Fernsteuerung der Settopbox oder einem oder mehreren der Geräte 2-5 steht. Die Kommunikationsverbindung kann ein normales Kabel, eine Internetverbindung, eine Satellitenverbindung oder sonstige Verbindung sein.

Soll die Fernsteuerung 6 für ein bestimmtes Gerät 2-5 programmiert werden, so wird zunächst davon ausgegangen, dass in der Fernsteuerung 6 noch kein passendes Codeset für das Gerät vorhanden ist. Die Settopbox 1 fragt die möglicherweise vorhandenen EDID-daten von dem Fernsehgerät 2 ab und übermittelt sie an die Datenbank 8 als sogenannte Metadaten. In der Datenbank 8 werden diese Daten zu Fingerabdruckdaten aufbereitet, indem solche Metadaten, die zur Identifizierung des Gerätes nicht geeignet sind, ausgefiltert werden.

Diese gefilterten Daten werden als "Fingerprintdaten" bezeichnet. In der Datenbank wird dann gesucht, ob zu diesen Fingerprintdaten bereits eine eindeutige Referenzierung zu einem einzigen Codeset besteht. Ist dies der Fall, so werden diese Codesetdaten von der Datenbank 7 über die Settopbox 1 und weiter über die bidirektionale Verbindung zu der Fernsteuerung 6 übertragen. Damit ist der Programmiervorgang für das Fernsehgerät 2 beendet und das Fernsehgerät kann von der Fernsteuerung 6 bedient werden. Für weitere Geräte erfolgt dieser Vorgang in analoger Weise.

Ist dagegen in der Datenbank 8 noch keine eindeutige Referenzierung zwischen den Fingerabdruckdaten und einem Codeset vorhanden, so wird folgendes durchgeführt:
In der Datenbank wird nach Teilübereinstimmungen der Fingerprintdaten gesucht, z.B. nach Hersteller und Modellname. Im Regelfall existieren zu solchen Teilübereinstimmungen mehrere Codesets. Die Datenbank ist so organisiert, dass die möglichen Codesets dem Benutzer nach Wahrscheinlichkeitskriterien geordnet angeboten werden. Codesets für Geräte mit hoher Wahrscheinlichkeit sind in der angebotenen Tabelle weiter vorne als Codesets für Geräte mit einer geringeren Wahrscheinlichkeit.

Kriterien für die Wahrscheinlichkeit sind:
a) Anzahl der Abfragen mit den entsprechenden Fingerprintdaten; und
b) Zeitpunkt der Abfrage mit diesen Fingerprintdaten.

Es wird somit eine Gewichtungstabelle für die Codesets erzeugt, die als "Gewicht" die Summe aller positiv beschiedener Anfragen multipliziert mit dem Kehrwert der Zeitdifferenz enthält. Eine positiv beschiedene Anfrage liegt dann vor, wenn ein Benutzer eine positive Rückmeldung an die Datenbank rückgemeldet hat, dass also bei dem entsprechenden Fingerprint der richtige Codeset bestätigt wurde. Zeitdifferenz ist die Zeitdauer zwischen dem aktueller Zeitpunkt und den jeweils positiv beschiedenen Anfragen.

Auf diese Weise erhalten häufig abgefragte Codesets ein hohes Gewicht und damit eine hohe Wahrscheinlichkeit. Ebenso erhalten jüngere positiv beschiedene Anfragen ein höheres Gewicht als ältere Anfragen, so dass aktuell verwendete Geräte ein hohes Gewicht haben, während ältere Geräte nach und nach in "Vergessenheit" geraten.

Die bei einer solchen Anfrage ausgewählten und dem Benutzer angebotenen Codesets sind also nach der Wahrscheinlichkeit geordnet. Der Benutzer ruft dann in dieser Ordnung angebotene Codesets ab, die von der Schnittstelle zu der zu programmierenden Fernsteuerung übertragen werden. Der Benutzer probiert dann, ob der Codeset passt. Ist dies der Fall, sendet er eine Bestätigung an die Datenbank. Passt der Codeset nicht, so wählt er in der angebotenen Tabelle den nächst folgenden Codeset aus und wiederholt den Vorgang solange, bis der passende Codeset gefunden wurde, oder beendet den Vorgang mit einer negativen Rückmeldung falls kein passender Codeset gefunden wurde.

Falls der Benutzer eine positive Rückmeldung meldet und diese mehrere Geräte referenziert, wird das Gewicht auf die verschiedenen möglichen Geräte aufgeteilt.

Die dem Benutzer dargebotene Ausgabe ist somit sortiert nach:
1. dem Gewicht aus der Gewichtungstabelle und
2. bei gleichem Gewicht nach der Anzahl der Geräte, die durch den entsprechenden Codeset abgedeckt sind.

Die Datenbank hat folgende Struktur:
- Typ, wie z.B. Fernseher, Videorecorder etc.
- Hersteller
- Modellname
- Modell-zu-Fernsteuerung
- Codeset Tabelle
- Gewicht-Hersteller
- Gewicht-Fernsteuerung.

Ein Codeset wird über die Fingerprintdaten bzw. über der Tripple Typ/Hersteller/Modell (wobei nicht alle vorhanden sein müssen) referenziert. Die Reihung der referenzierten Codesets wird anhand der Gewichtstabelleri (Gewicht-Hersteller bzw. Gewicht-Fernsteuerung) angepasst, um die wahrscheinlicheren Codesets vorzureihen.

Die Datenbank kann auch zusätzliche Felder enthalten, wie z.B. Herstelldatum, Herstelljahr, Seriennummer usw., sofern diese Daten geeignet sind, ein Gerät zu identifizieren.

Bei der Seriennummer wird überprüft, ob die von den EDID-Daten übermittelte Seriennummer innerhalb eines vorgegebenen Bereiches von Seriennummern liegt. Hierüber kann im Zusammenhang mit weiteren Daten der Fingerprintdaten das jeweilige Gerät identifiziert werden.

Da die Zuordnung des Codesets zu einem Gerät nicht von Anfang an eindeutig ist und somit die oben genannte Referenzierung nicht schon bei der ersten Abfrage durchgeführt werden kann, werden zunächst einige Codesets vor-referenziert. Erst wenn eine vorgegebene Anzahl von Bestätigungen durch Benutzer bei der Datenbank eingegangen ist, wird ein Codeset als zu dem entsprechenden Fingerprint zugeordnet referenziert.

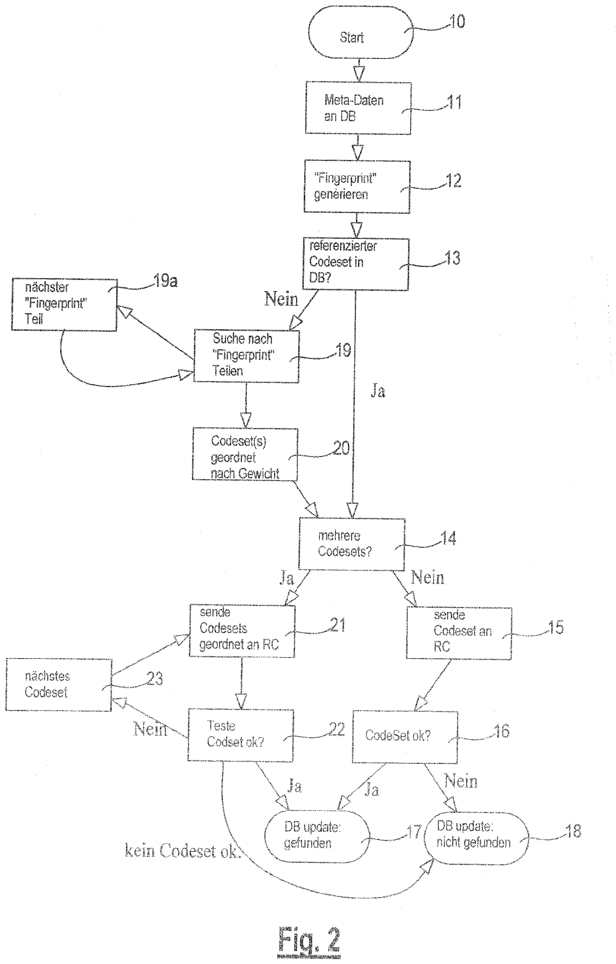

Figur 2 zeigt schematisch den Vorgang des Programmierens einer Fernsteuerung. In einem ersten Schritt 10 wählt der Benutzer das zu programmierende Gerät aus, wie z.B. TV-Gerät, Videorecorder etc. All dies wird ihm auf dem Bildschirm 2 angezeigt. Die Schnittstelle, wie z.B. die Settopbox 1, liest dann die EDID-Daten des ausgewählten Gerätes aus und sendet sie im Schritt 11 an die Datenbank 8. Die Datenbank filtert aus den EDID-Daten im Schritt 12 die Fingerprintdaten heraus und sucht im Schritt 13 in der Datenbank, ob zu diesen Fingerprintdaten bereits ein Codeset referenziert ist. Ist dies der Fall, wird im Schritt 14 überprüft, ob mehrere Codesets referenziert sind. Ist dies nicht der Fall, wird der eine referenzierte Codeset im Schritt 15 an die Fernsteuerung übermittelt und dort im Schritt 16 überprüft, ob der Codeset passt. Ist dies der Fall, wird im Schritt 17 an die Datenbank gemeldet, dass der richtige Codeset gefunden ist. Passt dagegen der Codeset nicht, wird im Schritt 18 der Datenbank gemeldet, dass kein passender Codeset gefunden wurde.

Wurde dagegen im Schritt 13 festgestellt, dass noch kein referenzierter Codeset in der Datenbank vorhanden ist, wird im Schritt 19 nach Fingerprintteilen gesucht, wobei in einer Schleife 20 auffeinanderfolgend mehrere Fingerprintteile gesucht werden. Die Schleife wird beendet, wenn alle Finferprintteile abgearbeitet sind. Sind zu diesen Fingerprintteilen mehrere Codesets gespeichert, werden diese im Schritt 20 nach den oben beschriebenen Gewichten geordnet und entsprechend Schritt 14 wiederum überprüft, ob mehrere Codesets vorhanden sind. Ist dies der Fall, werden diese mehreren Codesets im Schritt 21 in der nach Gewicht geordneten Reihenfolge an die Fernsteuerung übermittelt und in einer Schleife der Schritte 22 und 23 solange getestet, bis ein passender Codeset gefunden wurde, was dann im Schritt 17 wiederum an die Datenbank gemeldet wird. Wenn alle im Schritt 21 an die Fernsteuerung übertragenen Codesets durchgeprüft wurden und kein passender Codeset gefunden wurde, so wird dies im Schritt 22 wiederum zu Schritt 18 an die Datenbank gemeldet, dass kein passender Codeset vorhanden ist.

Die positiven Meldungen, dass ein passender Codeset gefunden wurde (Schritt 17) passt in der Datenbank das Feld für die Wahrscheinlichkeit an, indem ein Zähler heraufgesetzt wird und Datum und Uhrzeit vermerkt werden.

Die Suche nach Fingerprintteilen in der Schleife der Schritte 19 und 20 bezieht sich somit auf noch nicht referenzierte Codesets, die hier als vor-referenzierte Codesets bezeichnet werden, die nach Wahrscheinlichkeit dem Benutzer angeboten worden, wobei die Reihenfolge, in der die Codesets dem Benutzer angeboten wird, durch die Wahrscheinlichkeit festgelegt ist.

Mit der Erfindung kann somit eine Fernsteuerung sehr einfach und schnell an die jeweils zu steuernden Geräte angepasst werden, indem die passenden Codesets mit hoher Wahrscheinlichkeit an vorderen Stellen genannt werden.

Das bisher beschriebene Verfahren eignet sich für Fernsteuerungen, die im bidirektionale Betrieb eine Kommunikation mit der Settopbox und dem zu steuernden Gerät aufnehmen kann.

Es gibt auch Fernsteuerungen, die bereits eine große Anzahl von Codesets intern gespeichert haben. Bisher musste der Benutzer aus einem Beiblatt eine Code-Nummer heraussuchen, die auf den passenden Codeset verweist. Bei einigen Herstellern ist dabei eine sehr große Anzahl von möglichen Codesets vorhanden, die der Benutzer einzelnen ausprobieren muss. Auch hier kann mit der Erfindung eine Verbesserung erreicht werden, indem in analoger Weise in der Datenbank abgefragt wird, welche Code-Nummer in dem Speicher der Fernsteuerung den passenden Codeset referenziert.

Generell ist noch hervorzuheben, dass in der Datenbank 8 normalerweise komplette Codesets abgelegt sind, d.h. alle Funktionen einer Fernsteuerung. Bei einer Abfrage hingegen können auch nur Codesets abgefragt werden, z.B. wenn der Benutzer nicht an allen Funktionen interessiert ist, sondern nur an ausgewählten Funktionen, wie Lautstärke und Ein-/Ausschalten. Bei der Abfrage können dann zur Laufzeit "virtuelle" Codesets generiert und zusammengefasst werden, die nur diese Funktionen beschreiben. Beispielsweise unterscheidet sich eine erste Fernsteuerung von einer zweiten Fernsteuerung durch einige wenige Tasten oder das auszusendende Signal ist bei einigen Tasten unterschiedlich. Durch die Zusammenfassung zu einem virtuellen Codeset sind aber die zu verwendenden Signale bei beiden Fernsteuerungen identisch und man hat ein einziges Codeset für beide Fernsteuerungen.

Weiter können Default-Codesets, also spezielle Codesets, in der Datenbank hinterlegt sein, die Funktionen beschreiben, die nicht auf der Fernbedienung vorkommen, jedoch von dem zu steuernden Gerät unterstützt werden. Dies erlaubt auch die Definition von Funktionen, die standardmäßig von Fernsteuerungen eines bestimmten Herstellers unterstützt werden, aber nicht von jeder Fernsteuerung des Herstellers umgesetzt werden. Auch erlaubt dieser Ansatz, dass Codesets als wahrscheinliches Codeset geliefert werden können, ohne dass man die wirkliche Fernsteuerung kennt, deren Codeset also nicht in der Datenbank hinterlegt ist. Durch die Generierung von den virtuellen Codesets können diese Funktionen mit den Funktionen eines Fernsteuerung-Codesets kombiniert oder ergänzt werden.

Schließlich ist auch noch darauf hinzuweisen, dass der Benutzer mit der Erfindung auch ein "Update" seiner Fernsteuerung vornehmen kann, wenn der Hersteller des Gerätes oder der Fernsteuerung neue oder geänderte Funktionen bereitstellt.

## Patentansprüche

1. Verfahren zum Programmieren einer Fernsteuerung(6) mit folgenden Schritten:
- Auswählen des mit der Fernsteuerung (6) fernzusteuernden Gerätes (1),
- Lesen von das Gerät (1) identifizierenden Meta-Daten,
- Übertragen (11) der Meta-Daten an eine externe Datenbank (8),
- Selektieren von zu dem Gerät (1) passenden Codesets in der Datenbank (8),
- Übertragen von mindestens einem selektierten Codeset an die Fernsteuerung (6) und
- Senden eines Bestätigungssignals (17) an die Datenbank (8), wenn der ausgewählte Codeset korrekt zu dem fernzusteuernden Gerät (1) passt,
**gekennzeichnet durch** folgende Schritte:
- Filtern der Meta-Daten in der externen Datenbank (8) zur Erzeugung von "Fingerabdruckdaten", die ein Modell des identifizierten Gerätes, nicht aber das identifizierte Gerät beschreiben,
- Zuordnen (13) der "Fingerabdruckdaten" zu in der Datenbank (8) gespeicherten Codesets nach einer Wahrscheinlichkeitsgewichtung, wobei die Wahrscheinlichkeitsgewichtung eine Zeitdifferenz zwischen der aktuellen Abfrage und früheren mit dem Bestätigungssignal bestätigten Abfragen berücksichtigt sowie eine Häufigkeit der früheren mit dem Bestätigungssignal bestätigten Abfragen, und
- Übertragung von Codesets (21) an die Fernsteuerung (6) in einer nach der Wahrscheinlichkeitsgewichtung geordneten Reihenfolge.

2. Verfahren nach Anspruch 1, **dadurch gekennzeichnet, dass** die Meta-Daten EDID-Daten des Gerätes (1) sind.

## Claims

1. A method for programming a remote control (6) comprising the steps of:
- Selecting the device (6) to be remotely controlled with the remote control (1);
- Reading metadata identifying the device (6);
- Transmitting (11) the metadata to an external database (8);
- Selecting code sets matching the device (1) in the database (8);
- Transmitting at least one selected code set to the remote control (8); and
- Sending an acknowledgment signal (17) to the database (8), when the selected code set properly matches the device to be remotely controlled;
**characterized by** the following steps:
- filtering the meta-data in the external database (8) in order to generate "fingerprints", that describe a model of the identified device but not the identified device;
- assigning (13) the "fingerprints" to the multiple code sets stored in the database (8) according to probability weighting, wherein the probability weighting considers a time difference between the current query and queries previously confirmed by the confirmation signal as well as a frequency of the previous queries that are acknowledged with the acknowledgment signal; and
- transmitting the multiple code sets (21) to the remote control (6) in a sequence sorted by probability weighting.

2. A method according to claim 1, **characterized in that** the meta-data are EDID data for the device (1).

## Revendications

1. Méthode de programmation d'une télécommande (6) comprenant les étapes suivantes :
- Sélectionner de l'appareil (1) à commander à distance par la télécommande (6),
- Lire des méta-données identifiant l'appareil (1),
- Transmettre (11) les méta-données vers une base de données (8) externe,
- Sélecter des jeu de codes correspondant à l'appareil (1) dans la base de données (8),
- Transmettre au moins un jeu de codes sélectionnés à la télécommande (6) et
- Émettre d'un signal de confirmation (17) à la base de données (8) lorsque le jeu de codes sélectionné correspond correctement à l'appareil (1) à commander à distance,
**caractérisé par** les étapes suivantes :
- Filtrer des méta-données dans la base de données (8) externe pour générer des "données d'empreintes digitales" décrivant un modèle de l'appareil identifié mais pas l'appareil identifié,
- Compter (13) des "données d'empreintes digitales" parmi les jeu de codes multiples stockés dans la base de données (8) selon une pondération de probabilité, où la pondération de la probabilité tient compte d'une différence de temps entre la requête actuelle et des requêtes précédentes acquittées avec le signal d'accusé de réception et d'une fréquence des requêtes précédentes acquittées avec le signal de confirmation, et
- Transmettre des jeu de codes (21) multiple à la télécommande (6) dans un ordre selon une pondération de probabilité.

2. Méthode selon la revendication 1, **caractérisée en ce que** les métadonnées sont des données EDID de l'appareil (1).
